# EUROPEAN PATENT SPECIFICATION

(11) **EP 3 954 587 B1**
(45) Date of publication and mention of the grant of the patent: **27.09.2023**
(21) Application number: 21190657.3
(22) Date of filing: 10.08.2021
(51) Int. Cl.: B60R 21/23

(54) **FAR-SIDE AIRBAG APPARATUS**
FAR-SIDE-AIRBAG-VORRICHTUNG
DISPOSITIF DE COUSSIN DE SÉCURITÉ GONFLABLE D'EXTRÉMITÉ LATÉRALE

(30) Priority: 11.08.2020 JP 2020135874; 18.02.2021 JP 2021024469
(43) Date of publication of application: 16.02.2022
(73) Proprietor: Toyoda Gosei Co., Ltd., Kiyosu-shi, Aichi 452-8564 (JP)
(72) Inventor: ICHIMURA, Takashi, Kiyosu-shi, 452-8564 (JP); HATTA, Hiroshi, Kiyosu-shi, 452-8564 (JP); SUZUKI, Kyohei, Kiyosu-shi, 452-8564 (JP); MATSUZAKI, Yuji, Kiyosu-shi, 452-8564 (JP); HAYASHI, Takeki, Kiyosu-shi, 452-8564 (JP); HISAMINATO, Kazuki, Kiyosu-shi, 452-8564 (JP)
(74) Representative: Kramer Barske Schmidtchen Patentanwälte PartG mbB

(56) References cited:
- EP-A1- 2 960 116
- EP-A1- 3 127 758
- DE-A1-102018 120 880
- DE-A1-102020 100 381
- US-A1- 2012 091 697
- US-A1- 2019 084 520

## Description

### TECHNICAL FIELD

The present disclosure relates to a far-side airbag apparatus that protects, with an airbag, an occupant seated in a vehicle seat on a side far from a side wall portion of a vehicle when it is detected that an impact is applied to the side wall portion from outside or when it is predicted that an impact will be applied to the side wall portion.

### BACKGROUND ART

A far-side airbag apparatus may be mounted on a vehicle including a plurality of vehicle seats arranged side by side in a vehicle width direction. An outer shell part of an airbag in the airbag apparatus of this type is constituted by a bag body made of woven fabric. The bag body is folded into a compact storage form, and is fixed together with a gas generator in a side portion of a vehicle seat that is on a side close to an adjacent vehicle seat.

When it is detected that an impact is applied to a side wall portion such as a side door of the vehicle from a lateral side or an oblique front side due to a side collision or the like, or when it is predicted that an impact will be applied, inflation gas is ejected from the gas generator. Due to the inflation gas, the bag body is inflated, comes out from the side portion, and is unfolded and inflated between adjacent vehicle seats.

An upper body of an occupant seated in the vehicle seat on a side far from the side wall portion to which the impact is applied tends to move to the lateral side or the oblique front side of the side wall portion side due to inertia, and is received by the bag body and protected from the impact.

For example, one form of the far-side airbag apparatus is disclosed in WO2019/110705. A bag body of the airbag apparatus includes a lower inflation portion and an upper inflation portion having a smaller capacity than the lower inflation portion. The lower inflation portion and the upper inflation portion are independent of each other. A gas generator is disposed in the lower inflation portion having a large capacity.

The lower inflation portion is unfolded and inflated at least on a lateral side of a chest below a neck of an occupant. The upper inflation portion is unfolded and inflated at a part above the chest of the occupant, more specifically, on a lateral side of the neck and a head, in a state in which the upper inflation portion is inclined to approach the occupant toward an upper side.

The upper inflation portion overlaps the lower inflation portion. Each of a lower end portion of the upper inflation portion and an upper end portion of the lower inflation portion is formed with a communication hole that communicates an internal space of the upper inflation portion with an internal space of the lower inflation portion. The upper inflation portion and the lower inflation portion are joined to each other by a sewn portion provided around the communication hole.

According to the far-side airbag apparatus described in WO2019/110705, inflation gas is supplied from the gas generator to the lower inflation portion in response to detection or prediction of an impact on a vehicle. The inflation gas causes the lower inflation portion to start unfoldment and inflation. A part of the inflation gas in the lower inflation portion flows into the upper inflation portion through the communication hole. For this reason, the unfoldment and inflation of the upper inflation portion is started with a delay from the start of unfoldment and inflation of the lower inflation portion.

The chest of the occupant is received by the lower inflation portion and protected from the impact. The neck and the head are received by the upper inflation portion and protected from the impact.

Further, US 2012/0091697 A1 discloses an occupant restraint corresponding to the preamble of claim 1. US 2019/0084520 A1 discloses a side airbag apparatus.

### SUMMARY OF INVENTION

In the far-side airbag apparatus described in WO2019/110705, the lower inflation portion and the upper inflation portion are independent of each other and communicate with each other only by the communication hole. In the bag body, the lower inflation portion is first unfolded and inflated by the inflation gas. After the lower inflation portion is unfolded and inflated to a certain extent, the inflation gas in the lower inflation portion is supplied to the upper inflation portion through the communication hole. For this reason, the internal pressure of the lower inflation portion is high at an initial stage of inflation of the bag body. To withstand the high internal pressure, it is necessary for the lower inflation portion to be formed of woven fabric made of yarns having high fineness. However, as the fineness of the yarns increases, the thickness of the woven fabric increases and the size of the bag body when folded into the storage form increases. A large space is necessary when the bag body is stored in the vehicle seat and the storage performance is deteriorated.

The present disclosure has been made in view of such circumstances and an object of the present disclosure is to provide a far-side airbag apparatus capable of improving storage performance while ensuring pressure resistance of a bag body during inflation.

A far-side airbag apparatus for solving the above problems is a far-side airbag apparatus configured to be applied to a vehicle. The vehicle includes a plurality of vehicle seats arranged in parallel in a width direction of the vehicle seats. Two side portions of the vehicle in the width direction are constituted by a pair of side wall portions, and one of the two side wall portions is set to a specific side wall portion. An airbag is unfolded and inflated by inflation gas between adjacent vehicle seats when it is detected that an impact is applied to the specific side wall portion from outside or when it is predicted that an impact will be applied to the specific side wall portion. A bag body constituting an outer shell part of the airbag includes a lower inflation portion that is unfolded and inflated at least on a lateral side of a chest among parts below a neck of an occupant seated in one of the adjacent vehicle seats, and an upper inflation portion that is unfolded and inflated on a lateral side of a part above the chest of the occupant in a state in which the upper inflation portion is inclined to approach the occupant toward an upper side. The lower inflation portion is formed by joining a surface lower cloth portion on a side close to the occupant and a back lower cloth portion on a side far from the occupant at a peripheral edge portion different from an upper peripheral edge portion. The upper inflation portion is formed by joining a surface upper cloth portion on a side close to the occupant and a back upper cloth portion on a side far from the occupant at a peripheral edge portion different from a lower peripheral edge portion. The surface lower cloth portion, the back lower cloth portion, and the surface upper cloth portion are integrally formed of a large cloth sheet, the back upper cloth portion is formed of a small cloth sheet smaller than the large cloth sheet, and a lower peripheral edge portion of the back upper cloth portion is joined to an upper peripheral edge portion of the back lower cloth portion.

According to the above configuration, the cloth sheets used for the bag body are two types of cloth sheets having different sizes, such as the large cloth sheet and the small cloth sheet. The large cloth sheet includes the surface lower cloth portion, the back lower cloth portion, and the surface upper cloth portion. The small cloth sheet includes the back upper cloth portion. The lower inflation portion is formed by joining the surface lower cloth portion and the back lower cloth portion at the peripheral edge portion different from the upper peripheral edge portion. The upper inflation portion is formed by joining the surface upper cloth portion and the back upper cloth portion at the peripheral edge portion different from the lower peripheral edge portion. The surface upper cloth portion and the surface lower cloth portion are a part of the large cloth sheet and are connected to each other. The lower peripheral edge of the back upper cloth portion is joined to the upper peripheral edge of the back lower cloth portion. In the bag body, the upper inflation portion is connected to an upper end portion of the lower inflation portion at a lower end portion. The lower inflation portion and the upper inflation portion of the bag body are connected to and integrated with each other and can be regarded as one inflation portion having a large capacity.

Therefore, the inflation gas is supplied to the lower inflation portion and the upper inflation portion from an initial stage of inflation of the bag body. The internal pressure of the bag body is lower than the internal pressure of the lower inflation portion in a case where the inflation gas is exclusively supplied to the lower inflation portion at the initial stage of inflation of the bag body (WO2019/110705 corresponds to this case). A cloth portion capable of withstanding the internal pressure may a cloth portion made of yarns having lower fineness than a cloth portion of the bag body described in WO2019/110705. The cloth portion made of yarns having low fineness is thinner than the cloth portion made of yarns having high fineness. Therefore, the size of the bag body when folded into a storage form is reduced. The space necessary to store the bag body in a storage form in the vehicle seat is reduced and the storage performance is improved.

In the far-side airbag apparatus, each of the vehicle seats preferably includes a seat back that supports an occupant from a rear side, the bag body preferably includes a fixing portion. The bag body is preferably fixed by the fixing portion to a side portion of a vehicle seat on a side far from the specific side wall portion, the side portion being on a side close to the specific side wall portion. The lower inflation portion preferably includes a contact portion that comes into contact with a seat back of a vehicle seat on a side close to the specific side wall portion when the lower inflation portion is in an unfolded and inflated state.

When the lower inflation portion is pushed by an upper body of the occupant that tends to move toward a lateral side or an oblique lateral side of the specific side wall portion, the lower inflation portion tends to fall toward the vehicle seat close to the specific side wall portion with the fixing portion as a fulcrum.

However, according to the above configuration, the contact portion of the lower inflation portion comes into contact with the seat back of the vehicle seat on the side close to the specific side wall portion, and the lower inflation portion is received by the seat back. The seat back restricts the lower inflation portion from further falling. As a result, the performance of the lower inflation portion that restricts the movement of the upper body of the occupant and protects the upper body from the impact is enhanced.

In the far-side airbag apparatus, the lower inflation portion preferably includes a portion whose inflation thickness in the width direction is larger than other portions of the lower inflation portion. The portion having a large inflation thickness preferably includes the contact portion.

According to the above configuration, a portion of the lower inflation portion whose inflation thickness in the width direction of the vehicle seat is larger than other portions of the lower inflation portion functions as the contact portion. The contact portion comes into contact with the seat back of the vehicle seat on the side close to the specific side wall portion, thereby restricting the movement of the lower inflation portion.

In the far-side airbag apparatus, the upper inflation portion preferably includes an inflation thickness restricting portion that restricts an inflation thickness of a portion of the upper inflation portion that is on a lateral side of the neck. The inflation thickness restricting portion preferably restricts the inflation thickness such that an inflation thickness of the portion on the lateral side of the neck is smaller than an inflation thickness of a portion that is adjacent to the above-mentioned portion in an upper-lower direction.

According to the above configuration, the inflation thickness of the portion of the upper inflation portion that is on the lateral side of the neck of the occupant is restricted by the inflation thickness restricting portion. Here, from the viewpoint of protecting the head of the upper body of the occupant from the impact, it is required that a portion of the upper inflation portion that is on a lateral side of the head has a large inflation thickness. Further, from the viewpoint of protecting a shoulder from the impact, it is required that a portion of the lower inflation portion that is on a lateral side of the shoulder has a large inflation thickness.

Therefore, as described above, the inflation thickness of the portion of the upper inflation portion that is on the lateral side of the neck is smaller than the inflation thickness of the portion of the upper inflation portion that is adjacent to the above-mentioned portion in the upper-lower direction, and thereby the inflation thickness of the portion of the upper inflation portion that is on the lateral side of the head can be larger than the inflation thickness of the portion of the upper inflation portion that is located on the lateral side of the neck. In addition, the inflation thickness of the portion of the lower inflation portion that is on the lateral side of the shoulder can be made larger than the inflation thickness of the portion of the lower inflation portion that is on the lateral side of the neck.

In the far-side airbag apparatus, the inflation thickness restricting portion is preferably disposed inside the upper inflation portion and extends between the surface upper cloth portion and the back upper cloth portion.

According to the above configuration, the inflation portion is unfolded and inflated when the inflation gas is supplied to the upper inflation portion. With the unfoldment and inflation, the surface upper cloth portion and the back upper cloth portion tend to expand away from each other in the width direction of the vehicle seat. However, with the movement of the surface upper cloth portion and the back upper cloth portion, the inflation thickness restricting portion is pulled in the above direction. When the inflation thickness restricting portion is in a tensioned state, further inflation of the portion of the surface upper cloth portion and the back upper cloth portion to which the inflation thickness restricting portion is joined is restricted. Due to this restriction, the inflation thickness of the portion of the upper inflation portion that is on the lateral side of the neck is smaller than the inflation thickness of a portion of the upper inflation portion that is adjacent to the above-mentioned portion in the upper-lower direction.

In the far-side airbag apparatus, each of the large cloth sheet and the small cloth sheet is preferably formed of woven fabric including a warp and a weft. In the surface lower cloth portion and the back lower cloth portion, peripheral edge portions different from upper peripheral portions are preferably joined to each other by a lower peripheral edge sewn portion. In the surface upper cloth portion and the back upper cloth portion, peripheral edge portions different from lower peripheral edge portions are preferably joined to each other by an upper peripheral edge sewn portion. A lower peripheral edge portion of the back upper cloth portion and an upper peripheral edge portion of the back lower cloth portion are preferably joined by an intermediate peripheral edge sewn portion. The upper peripheral edge sewn portion, the lower peripheral edge sewn portion, and the intermediate peripheral edge sewn portion preferably intersect each other at a boundary portion between the surface lower cloth portion, the back lower cloth portion, the surface upper cloth portion, and the back upper cloth portion. At the boundary portion, the upper peripheral edge sewn portion, the lower peripheral edge sewn portion, and the intermediate peripheral edge sewn portion preferably intersect both the warp and the weft of the large cloth sheet, and preferably intersect both the warp and the weft of the small cloth sheet.

Here, when one of an end portion of the lower peripheral edge sewn portion, an end portion of the upper peripheral edge sewn portion, and an end portion of the intermediate peripheral edge sewn portion is separated from the others at the boundary portion and there is a gap between the end portions, the inflation gas inside the bag body may leak to the outside of the bag body through the gap.

In this regard, at the boundary portion according to the above configuration, the upper peripheral edge sewn portion, the lower peripheral edge sewn portion, and the intermediate peripheral edge sewn portion intersect each other, and there is no gap between the end portions. For this reason, the inflation gas inside the bag body is less likely to leak to the outside due to the gap.

Further, at the boundary portion, when one of the lower peripheral edge sewn portion, the upper peripheral edge sewn portion, and the intermediate peripheral edge sewn portion is parallel to one of the warp and the weft of the large cloth sheet and one of the warp and the weft of the small cloth sheet, the following phenomenon may occur. The phenomenon is that, when a force is applied to a seam allowance in a direction in which the force intersects a peripheral edge sewn portion, a thread of the warp and the weft that is parallel to the peripheral edge sewn portion moves in a direction away from the peripheral edge sewn portion, and the weave design in the seam allowance may be broken or the thread may fall off from the seam allowance.

In this regard, according to the above configuration, at the boundary portion, the upper peripheral edge sewn portion, the lower peripheral edge sewn portion, and the intermediate peripheral edge sewn portion intersect both the warp and the weft of the large cloth sheet and intersect both the warp and the weft of the small cloth sheet. No yarn of the warp and the weft is parallel to the peripheral edge sewn portion. For this reason, even when a force is applied to the seam allowance in a direction in which the force intersects the peripheral edge sewn portion, the warp and the weft constituting the seam allowance are less likely to move away from the peripheral edge sewn portion. Deformation of the weave design in the seam allowance or falling of the warp and the weft from the seam allowance is prevented.

In the far-side airbag apparatus, a console box is preferably disposed between the adjacent vehicle seats. The bag body is preferably unfolded and inflated such that a lower end of the lower inflation portion is located below an upper surface of the console box.

According to the above configuration, at least the lower end portion of the lower inflation portion is unfolded and inflated between the console box and the occupant. A part of the lower inflation portion that is lower than the upper surface of the console box enters between the console box and the occupant. The above-mentioned part of the lower inflation portion comes into contact with the console box, thereby being restricted by the console box from further moving toward the specific side wall portion. As a result, a position of the part of the lower inflation portion that is lower than the upper surface of the console box is stabilized.

In the far-side airbag apparatus, the lower inflation portion is preferably inflated such that an inflation thickness in the width direction decreases toward a lower side.

According to the above configuration, when the inflation thickness of the lower inflation portion in the width direction decreases toward the lower side, the lower inflation portion easily enters between the console box and the occupant.

The far-side airbag apparatus preferably further includes a gas generator including a gas ejection portion that ejects inflation gas. At least the gas ejection portion of the gas generator is preferably disposed inside the lower inflation portion. An inner tube is preferably disposed inside the lower inflation portion in a state of surrounding the gas ejection portion of the gas generator. The inner tube preferably has a gas outlet that opens downward in the lower inflation portion.

Here, a gap between the console box and the upper body of the occupant is originally narrow. In addition, when an impact is applied to the specific side wall portion, the upper body of the occupant moves toward the specific side wall portion due to inertia, that is, toward the console box. As time passes, the gap between the console box and the occupant is further narrowed. When the unfoldment and inflation of the lower inflation portion is started slowly, it becomes difficult for the lower inflation portion to enter the gap.

In this regard, according to the above configuration, when the inflation gas is ejected from the gas ejection portion of the gas generator, the inflation gas flows in the inner tube. The inflation gas flows downward in the lower inflation portion through the gas outlet of the inner tube. For this reason, the lower inflation portion can be unfolded and inflated downward at an early stage, and can be inserted into the gap between the console box and the occupant.

According to the far-side airbag apparatus, it is possible to improve the storage performance while ensuring the pressure resistance of the bag body during inflation.

### BRIEF DESCRIPTION OF DRAWINGS

Fig. 1 is a plan view of a part of a vehicle equipped with a vehicle far-side airbag apparatus according to an embodiment of the present disclosure;
Fig. 2 is a schematic cross-sectional view of a vehicle seat, a bag body, a console box, and an occupant as viewed from a vehicle front side according to the embodiment;
Fig. 3 is a cross-sectional plan view illustrating a part of an internal structure of a side portion of a seat back in which an airbag module is assembled according to the embodiment;
Fig. 4 is a side view illustrating a part of a vehicle seat provided with the far-side airbag apparatus and peripheral portions of the vehicle seat together with the occupant and the bag body according to the embodiment;
Fig. 5 is a side view of the airbag module and the console box as viewed from a front passenger seat side according to the embodiment;
Fig. 6 is an unfolded view illustrating the bag body, an inflation thickness restricting portion, and an inner tube in an unfolded state according to the embodiment;
Fig. 7 is a side view of the airbag module when the bag body is in an uninflated and folded form as viewed from a driver seat side according to the embodiment;
Fig. 8 is an enlarged side view of a part of a portion A in Fig. 7;
Fig. 9 is an enlarged side view of a part of a portion B in Fig. 7;
Fig. 10 is a side view of the airbag module when the bag body is in the uninflated and folded form as viewed from the front passenger seat side according to the embodiment;
Fig. 11 is an enlarged side view illustrating a part of a portion C of Fig. 10;
Fig. 12 is an enlarged side view illustrating a part of a portion D of Fig. 10;
Fig. 13 is a side sectional view illustrating an internal structure of the airbag module according to the embodiment;
Figs. 14A and 14B illustrate the inflation thickness restricting portion according to the embodiment, in which Fig. 14A is a cross-sectional view of a part of the bag body when the bag body is in the uninflated and folded form, and Fig. 14B is a cross-sectional view of the part of the bag body when the bag body is unfolded and inflated;
Fig. 15 illustrates an internal structure of a rear portion of the airbag module according to the embodiment, and is a cross-sectional plan view illustrating a part of the inner tube together with the gas generator and the bag body when the bag body is in the uninflated and folded form;
Figs. 16A to Fig. 16D are schematic views illustrating a state in which the bag body according to the embodiment is unfolded and inflated to protect the occupant; and
Figs. 17A to Fig. 17C are schematic views illustrating the state in which the bag body according to the embodiment is unfolded and inflated to protect the occupant.

### DESCRIPTION OF EMBODIMENTS

Hereinafter, an embodiment of a vehicle far-side airbag apparatus will be described with reference to the drawings.

In the following description, a forward direction of a vehicle is referred to as a front side, and a backward direction is referred to as a rear side. An upper-lower direction refers to an upper-lower direction of the vehicle, and a left-right direction coincides with a left-right direction during vehicle forward movement that is a vehicle width direction. It is assumed that an occupant having the same physique as that of a crash test dummy is seated in a vehicle seat in a predetermined normal posture.

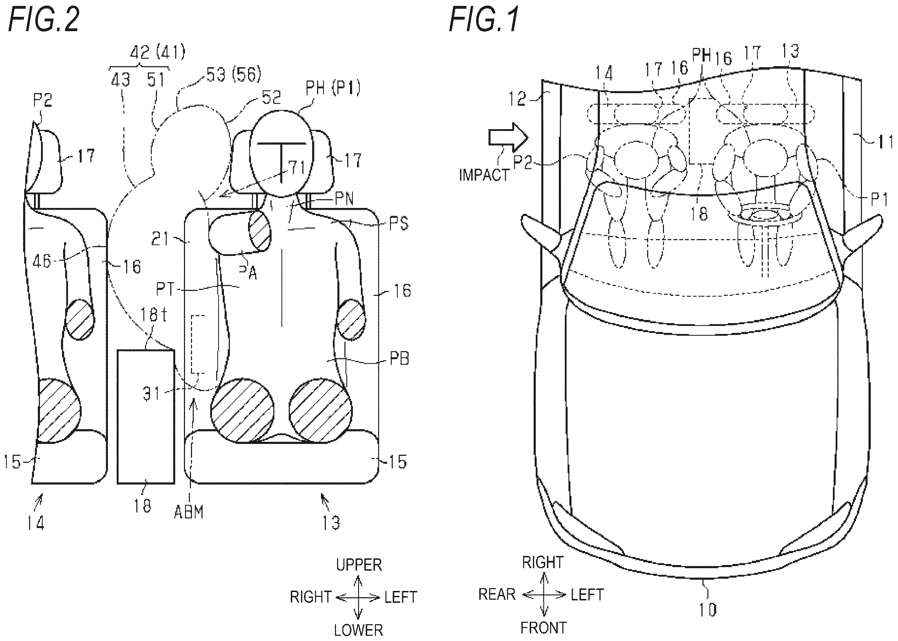

As illustrated in Fig. 1, two side portions of a vehicle 10 in the left-right direction are constituted by side wall portions 11, 12 including doors, pillars, and the like. In the vehicle interior, vehicle seats 13, 14 are arranged side by side in the left-right direction. The vehicle seat 13 close to the side wall portion 11 functions as a driver seat and an occupant (driver) P1 is seated in the vehicle seat 13. The vehicle seat 14 on a side close to the side wall portion 12 functions as a front passenger seat and an occupant P2 is seated in the vehicle seat 14. A console box 18 is disposed at a lower portion between the vehicle seats 13, 14. The vehicle seats 13, 14 have the same configuration. For this reason, only one vehicle seat 13 of the vehicle seats will be described here and the description of the vehicle seat 14 will be omitted.

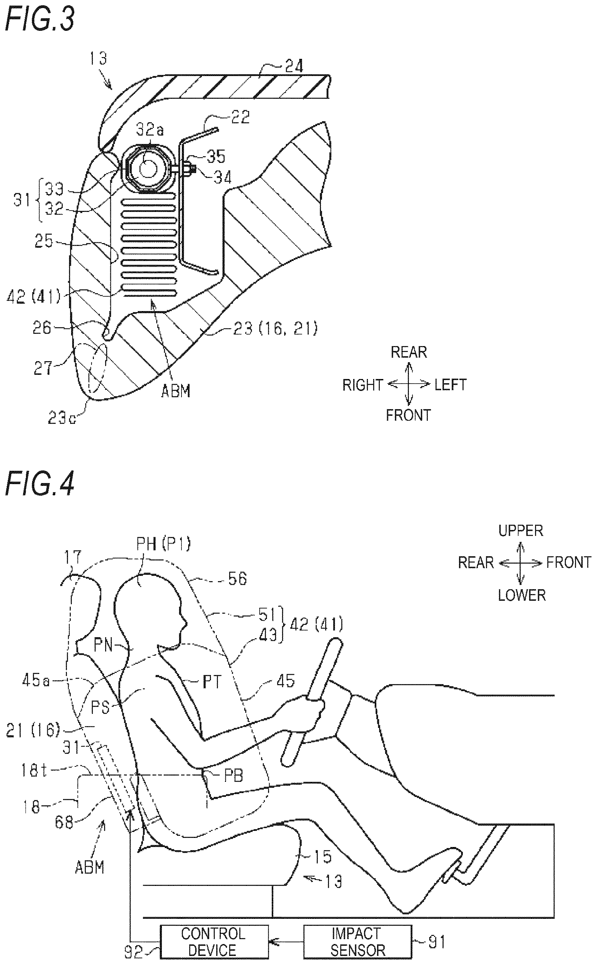

As illustrated in Figs. 2 and 4, the vehicle seat 13 includes a seat cushion 15, a seat back 16, and a headrest 17. The seat cushion 15 is a portion in which the occupant P1 is seated, and a position thereof is adjustable in the front-rear direction. The seat back 16 supports an upper body of the occupant P1 from a rear side. The seat back 16 stands upright from a rear side of the seat cushion 15, and an inclination angle thereof is adjustable. The headrest 17 supports a head PH of the occupant P1 from the rear side and is disposed on the seat back 16.

The vehicle seat 13 is disposed in a posture in which the seat back 16 faces forward. A width direction of the vehicle seat 13 disposed in this manner coincides with the left-right direction.

Fig. 3 illustrates an internal structure of a side portion 21 of the seat back 16 of the vehicle seat 13 that is on a vehicle seat 14 side. A seat frame constituting a framework part of the seat back 16 is disposed inside the seat back 16.

A side frame portion 22 constituting a part of the seat frame is disposed inside the side portion 21. The side frame portion 22 is formed by bending a metal plate or the like.

A seat pad 23 made of an elastic material such as urethane foam is disposed on a front side of the seat frame including the side frame portion 22. A hard backboard 24 made of synthetic resin or the like is disposed on a rear side of the seat frame. The seat pad 23 is covered with a surface cover. The surface cover is not illustrated in Fig. 3.

The seat pad 23 is provided with a storage portion 25 on the vehicle seat 14 side relative to the side frame portion 22. An airbag module ABM, which is a main part of the far-side airbag apparatus, is assembled in the storage portion 25.

A slit 26 extends toward an oblique front side on the vehicle seat 14 side from a corner portion of a front portion of the storage portion 25. A portion sandwiched between a front corner portion 23c of the seat pad 23 and the slit 26 (a portion surrounded by a two-dot chain line in Fig. 3) constitutes a breakable portion 27 to be broken by an airbag 41.

The airbag module ABM includes the airbag 41 and a gas generator 31 that supplies inflation gas to the airbag 41 as main members. Next, each of these members will be described.

### Gas Generator 31

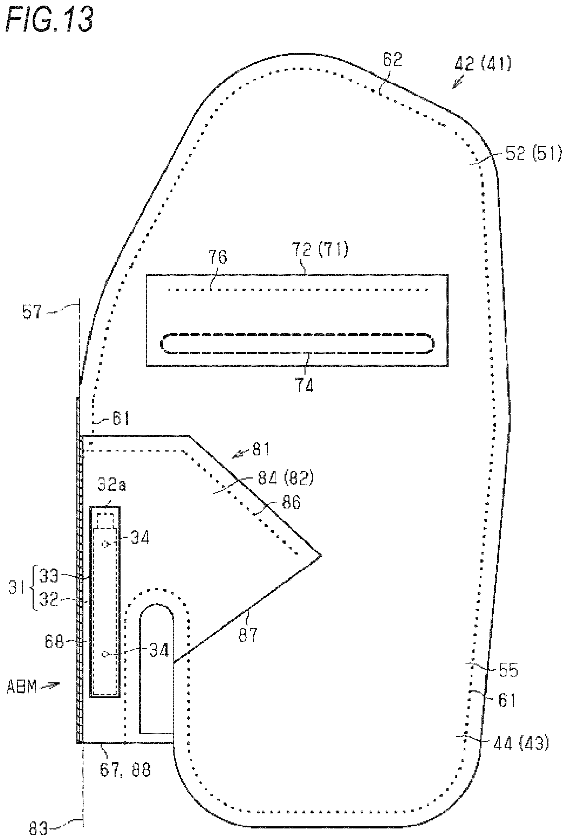

As illustrated in Figs. 3 and 13, the gas generator 31 includes an inflator 32 and a retainer 33 that covers the inflator 32. Here, a pyrotechnic type inflator is used as the inflator 32. The inflator 32 has a substantially columnar shape, and a gas generating agent (not illustrated) that generates the inflation gas is accommodated in the inflator 32. The inflator 32 includes a gas injection portion 32a at an upper end portion thereof. A cable (not illustrated) is connected to a lower end portion of the inflator 32. The cable is an input wiring for an operation signal to the inflator 32.

In addition to the pyrotechnic type inflator using the gas generating agent, a hybrid type inflator in which a partition wall of a high-pressure gas cylinder filled with high-pressure gas is broken by an explosive or the like to eject inflation gas may be used as the inflator 32.

The retainer 33 functions as a diffuser that controls a direction in which the inflation gas is ejected, and also has a function of fastening the inflator 32 together with the airbag 41 to the side frame portion 22. Most part of the retainer 33 is formed in a substantially tubular shape by bending a plate material such as a metal plate. Bolts 34 are fixed to the retainer 33 at a plurality of portions spaced apart from each other in the upper-lower direction, in the present embodiment, two portions. The bolts 34 are members for attaching the retainer 33 to the side frame portion 22 and extend in a direction away from the vehicle seat 14. In the gas generator 31, the inflator 32 and the retainer 33 may be integrated.

### Airbag 41

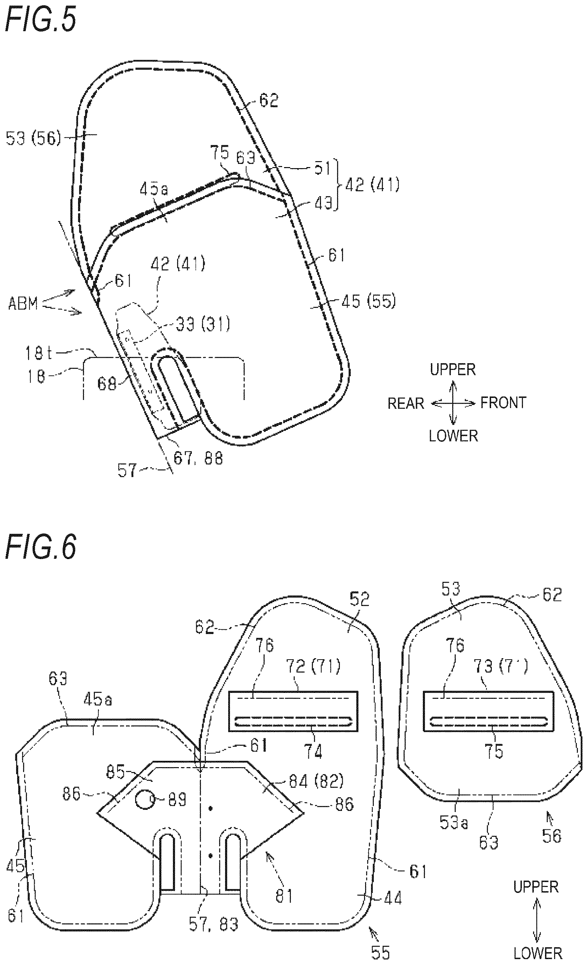

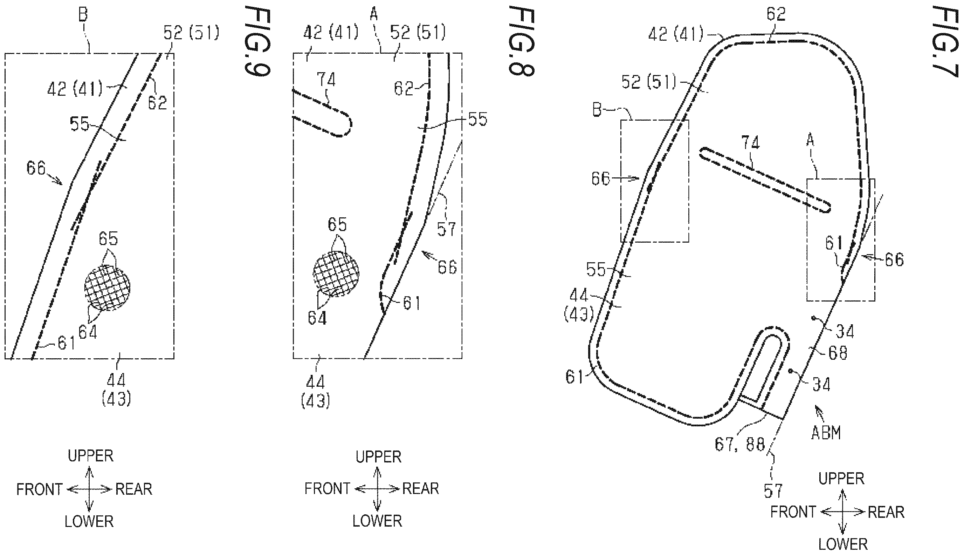

An outer shell part of the airbag 41 is constituted by a bag body 42. Figs. 5 and 7 illustrate the airbag module ABM in a state in which the bag body 42 is not filled with inflation gas and is unfolded in a planar shape (hereinafter referred to as "noninflated and folded form"). Fig. 13 illustrates an internal structure of the airbag module ABM.

As illustrated in Figs. 5, 7, and 13, the bag body 42 includes a lower inflation portion 43 and an upper inflation portion 51. The lower inflation portion 43 is unfolded and inflated on a lateral side of at least a chest PT, for example, the chest PT and a stomach PB in the present embodiment, among parts below a neck PN of the occupant P1 (see Figs. 2 and 4).

The lower inflation portion 43 includes a surface lower cloth portion 44 close to the occupant P1 and a back lower cloth portion 45 far from the occupant P1. The lower inflation portion 43 is formed by joining the surface lower cloth portion 44 and the back lower cloth portion 45 at a peripheral portion different from an upper peripheral edge portion. This joining is performed at a lower peripheral edge sewn portion 61.

As illustrated in Fig. 2, the lower inflation portion 43 has a maximum inflation thickness in the left-right direction at an upper end portion. The inflation thickness gradually decreases toward a lower side and is minimum at a lower end portion. The lower inflation portion 43 includes, at the upper end portion thereof, a contact portion 46 that comes into contact with the seat back 16 of the adjacent vehicle seat 14.

When the lower inflation portion 43 is unfolded and inflated, the lower end portion of the lower inflation portion 43 has a shape and size that satisfies the following condition. The condition is that a lower end of the lower inflation portion 43 is located below an upper surface 18t of the console box 18.

The upper inflation portion 51 is unfolded and inflated on a lateral side of a part above the chest PT of the occupant P1 in a state in which the upper inflation portion 51 is inclined to approach the occupant P1 toward an upper side.

As illustrated in Figs. 5 and 7, the upper inflation portion 51 includes a surface upper cloth portion 52 on a side close to the occupant P1 and a back upper cloth portion 53 on a side far from the occupant P1. The upper inflation portion 51 is formed by joining the surface upper cloth portion 52 and the back upper cloth portion 53 at a peripheral edge portion different from a lower peripheral edge portion. This joining is performed at an upper peripheral edge sewn portion 62.

As illustrated in Fig. 6, the surface lower cloth portion 44, the back lower cloth portion 45, and the surface upper cloth portion 52 are integrally formed by a large cloth sheet 55. The back upper cloth portion 53 is formed by a small cloth sheet 56 smaller than the large cloth sheet 55. The large cloth sheet 55 and the small cloth sheet 56 are also referred to as a base cloth, a panel cloth, or the like.

A folding line 57 extending in the upper-lower direction is set at a central portion of the large cloth sheet 55 in the width direction. The large cloth sheet 55 is creased along the folding line 57. The large cloth sheet 55 is disposed such that the folding line 57 is located on a rear side. As a result of this crease, the back lower cloth portion 45 is overlapped with the surface lower cloth portion 44. The back lower cloth portion 45 includes a protrusion 45a protruding upward at an upper portion thereof.

A shape of the back upper cloth portion 53 is line-symmetric relative to a shape of the surface upper cloth portion 52 of the large cloth sheet 55. The back upper cloth portion 53 includes a protrusion 53a protruding downward at a lower portion thereof.

A peripheral edge of the protrusion 53a of the back upper cloth portion 53, that is, a lower peripheral edge of the back upper cloth portion 53, is joined to a peripheral edge of the protrusion 45a of the back lower cloth portion 45, that is, an upper peripheral edge of the back lower cloth portion 45. This joining is performed at an intermediate peripheral edge sewn portion 63.

The lower peripheral edge sewn portion 61, the upper peripheral edge sewn portion 62, and the intermediate peripheral edge sewn portion 63 are formed by sewing corresponding cloth portions (sewing with sewing threads).

Regarding the sewing, in the present embodiment, the sewn portions are represented by two types of lines. The first type of lines are intermittently arranged thick lines having a certain length. This type of lines indicate a state in which the sewing threads are viewed from a lateral side (for example, refer to the upper peripheral edge sewn portion 62 in Fig. 5). The second type of lines are lines formed by points arranged at regular intervals. This type of lines indicate a cross section of the sewing threads in a plane passing through a sewn portion (for example, refer to the upper peripheral edge sewn portion 62 in Fig. 13). The same applies to a surface sewn portion 74, a back sewn portion 75, a common sewn portion 76, and a sewn portion 86, which will be described later.

In the present embodiment, the large cloth sheet 55 is folded in half such that the folding line 57 is located at a rear end portion of the lower inflation portion 43. Alternatively, the large cloth sheet 55 may be folded in half such that the fold line 57 is located at another end portion, for example, a front end portion, the upper end portion, or the lower end portion. The lower inflation portion 43 may be formed of two cloth sheets divided along the folding line 57.

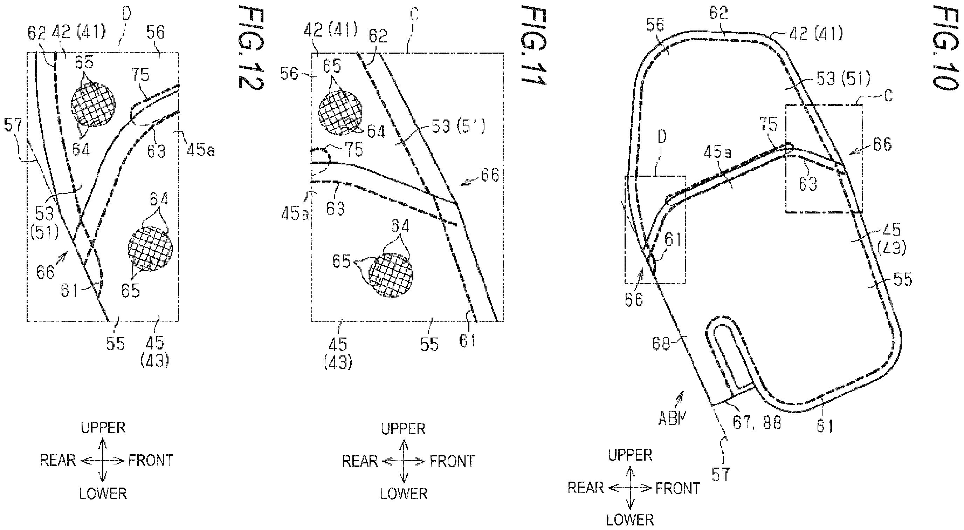

As illustrated in Figs. 11 and 12, the large cloth sheet 55 and the small cloth sheet 56 are formed of woven fabric having high strength and flexibility. The large cloth sheet 55 and the small cloth sheet 56 are formed by weaving warps 64 and wefts 65. In Figs. 11 and 12, only a part of the warps 64 and a part of the wefts 65 are illustrated. The same also applies to Figs. 8 and 9. The warps 64 and the wefts 65 extend in directions orthogonal to each other. As the warps 64 and the wefts 65, for example, yarns of synthetic fibers made of polyester, polyamide, or the like can be used.

In the large cloth sheet 55, the warps 64 and the wefts 65 are inclined at a constant angle relative to the folding line 57. In the present embodiment, the angle is set to 45°.

In the small cloth sheet 56, in a state in which the small cloth sheet 56 is joined to the large cloth sheet 55, one of the warps 64 and the wefts 65 is parallel to the folding line 57, and the other is orthogonal to the folding line 57. In the present embodiment, the warps 64 are parallel to the folding line 57 and the wefts 65 are orthogonal to the folding line 57.

At a boundary portion 66 between the surface lower cloth portion 44, the back lower cloth portion 45, the surface upper cloth portion 52, and the back upper cloth portion 53, the lower peripheral edge sewn portion 61, the upper peripheral edge sewn portion 62, and the intermediate peripheral edge sewn portion 63 intersect each other. In the boundary portion 66, all of the lower peripheral edge sewn portion 61, the upper peripheral edge sewn portion 62, and the intermediate peripheral edge sewn portion 63 are inclined relative to both of the warps 64 and the wefts 65 in the large cloth sheet 55. In the boundary portion 66, all of the lower peripheral edge sewn portion 61, the upper peripheral edge sewn portion 62, and the intermediate peripheral edge sewn portion 63 are inclined relative to both the warps 64 and the wefts 65 of the small cloth sheet 56.

As illustrated in Figs. 7 and 10, a rear lower end portion of the surface lower cloth portion 44 and a rear lower end of the back lower cloth portion 45, which are overlapped with each other, are not sewn by the lower peripheral edge sewn portion 61. This portion constitutes an insertion port 67 of the gas generator 31. The vicinity of an upper side of the insertion port 67 in the lower inflation portion 43 constitutes a fixing portion 68 for fixing the bag body 42 to the side frame portion 22.

The bag body 42 is configured as described above. Here, as illustrated in Fig. 6, cloth sheets used for the bag body 42 are two types of cloth sheets having different sizes, such as the large cloth sheet 55 and the small cloth sheet 56. The large cloth sheet 55 includes the surface lower cloth portion 44, the back lower cloth portion 45, and the surface upper cloth portion 52. The small cloth sheet 56 includes the back upper cloth portion 53. The lower inflation portion 43 is formed by joining the surface lower cloth portion 44 and the back lower cloth portion 45 at the peripheral edge portion different from the upper peripheral edge portion. The upper inflation portion 51 is formed by joining the surface upper cloth portion 52 and the back upper cloth portion 53 at the peripheral edge portion different from the lower peripheral edge portion. The surface upper cloth portion 52 and the surface lower cloth portion 44 are a part of the large cloth sheet 55 and are connected to each other. The lower peripheral edge portion of the protrusion 53a of the back upper cloth portion 53 is joined to the upper peripheral edge portion of the protrusion 45a of the back lower cloth portion 45.

As described above, in the bag body 42, in which the back upper cloth portion 53 is joined to the peripheral edge portion of the surface upper cloth portion 52 at the peripheral edge portion different from the lower peripheral edge portion and is joined to the upper peripheral edge portion of the back lower cloth portion 45 at the lower peripheral edge portion, the upper inflation portion 51 is connected to the upper end portion of the lower inflation portion 43 at the lower end portion.

Therefore, the lower inflation portion 43 and the upper inflation portion 51 of the bag body 42 are connected to and integrated with each other and can be regarded as one inflation portion having a large capacity.

### Inflation Thickness Restricting Portion 71

As illustrated in Fig. 2, the airbag 41 includes an inflation thickness restricting portion 71 at a portion of the upper inflation portion 51 that is on the lateral side of the neck PN. The inflation thickness restricting portion 71 satisfies the following condition to restrict an inflation thickness of the portion of the upper inflation portion 51 in the left-right direction. The condition is to make the inflation thickness in the left-right direction of the portion on the lateral side of the neck PN smaller than an inflation thickness in the left-right direction of a portion that is adjacent to the above-mentioned portion in the upper-lower direction.

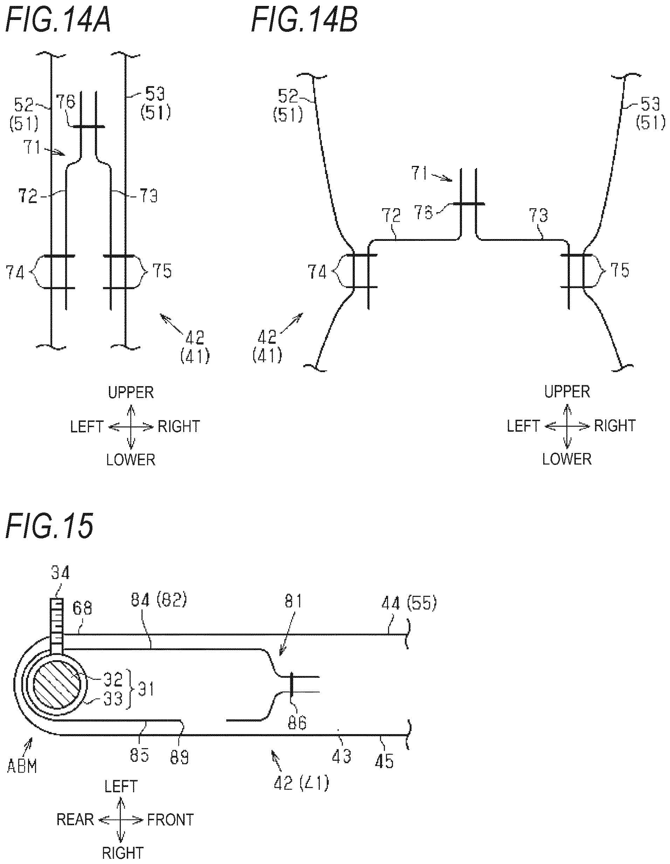

As illustrated in Figs. 6, 14A, and 14B, the inflation thickness restricting portion 71 includes a belt-shaped cloth called a tether disposed inside the upper inflation portion 51. The inflation thickness restricting portion 71 includes a surface cloth portion 72 on a side close to the occupant P1 and a back cloth portion 73 on a side far from the occupant P1. The surface cloth portion 72 and the back cloth portion 73 are formed of the same material as the bag body 42. The surface cloth portion 72 is joined to the surface upper cloth portion 52 by the surface sewn portion 74. Similarly, the back cloth portion 73 is joined to the back upper cloth portion 53 by the back sewn portion 75.

The surface cloth portion 72 and the back cloth portion 73 are joined to each other by the common sewn portion 76. According to such a joining form, the inflation thickness restricting portion 71 extends between the surface upper cloth portion 52 and the back upper cloth portion 53.

As illustrated in Fig. 14A, the surface cloth portion 72 and the back cloth portion 73 overlap each other in the left-right direction when the airbag 41 is in the uninflated and folded form. In this state, the surface sewn portion 74 and the back sewn portion 75 are overlapped in the left-right direction. The common sewn portion 76 is located at a portion shifted in the upper-lower direction from the surface sewn portion 74 and the back sewn portion 75. In the present embodiment, the common sewn portion 76 is located above the surface sewn portion 74 and the back sewn portion 75. Alternatively, the common sewn portion 76 may be located below the surface sewn portion 74 and the back sewn portion 75. As illustrated in Fig. 14B, when the bag body 42 is unfolded and inflated, the surface cloth portion 72 and the back cloth portion 73 are tensed, and thereby the inflation thickness restricting portion 71 restricts the inflation thickness of the portion of the upper inflation portion 51 that is on the lateral side of the neck PN.

### Inner Tube 81

As illustrated in Figs. 6, 13, and 15, the airbag 41 includes an inner tube 81 at a rear portion in the lower inflation portion 43. The inner tube 81 surrounds at least the gas injection portion 32a of the gas generator 31. The inner tube 81 has a function of rectifying the inflation gas ejected from the gas ejection portion 32a downward.

To form the inner tube 81, one cloth sheet 82 made of the same material as that of the bag body 42 is used. A folding line 83 extending in the upper-lower direction is set at a central portion of the cloth sheet 82 in the left-right direction. The cloth sheet 82 is folded in half along the folding line 83 and overlapped in the left-right direction. Here, to distinguish the two overlapped portions of the inner tube 81 from each other, the portion located on the side close to the occupant P1 is referred to as a surface cloth portion 84, and the portion located on the side far from the occupant P1 is referred to as a back cloth portion 85. An upper portion and a front upper portion of the surface cloth portion 84 and an upper portion and a front upper portion of the back cloth portion 85, which are overlapped in the left-right direction, are respectively joined to each other by the sewn portion 86.

Lower portions of the surface cloth portion 84 and the back cloth portion 85 overlapped in the left-right direction are sewn together with the surface lower cloth portion 44 and the back lower cloth portion 45 by a part of the lower peripheral edge sewn portion 61. The surface cloth portion 84 and the back cloth portion 85 are not joined to each other at two portions except for rear end edges (the folding line 83) thereof. One of the portions constitutes a gas outlet 87 and the other portion constitutes an insertion port 88 for the gas generator 31.

The inner tube 81 is joined to the bag body 42 by a sewn portion (not illustrated) in a state where the folding line 83 is aligned with the folding line 57 of the large cloth sheet 55 and the insertion port 88 is aligned with the insertion port 67.

The inner tube 81 has an opening 89 above the gas outlet 87. The opening 89 is provided to adjust a flow rate of the inflation gas flowing through the lower inflation portion 43 in the left-right direction. In the present embodiment, the opening 89 is formed in the back cloth portion 85 so that a large amount of inflation gas flows in the left-right direction away from the occupant P1. Conversely, the opening 89 may be formed in the surface cloth portion 84, or in each of the back cloth portion 85 and the surface cloth portion 84.

The inner tube 81 may be folded in half such that the folding line 83 is located at a front end portion of the inner tube 81. In this case, the surface cloth portion 84 and the back cloth portion 85 of the inner tube 81 are joined to each other at rear end portions thereof. The inner tube 81 may be configured such that the surface cloth portion 84 and the back cloth portion 85 are separated from each other along the folding line 83.

As illustrated in Figs. 5 and 13, with the gas generator 31 in a posture of extending substantially in the upper-lower direction, the entire gas generator 31 is inserted into the inner tube 81 in the rear end portion of the bag body 42 through the insertion ports 67, 88 substantially from below. Further, as illustrated in Fig. 15, the bolts 34 are inserted into the surface cloth portion 84 and the surface lower cloth portion 44 above the insertion ports 67, 88, and thereby the gas generator 31 is locked in a state of being positioned relative to the inner tube 81 and the bag body 42. Most parts of the bolts 34 are exposed to the outside of the bag body 42.

When the airbag 41 in the uninflated and folded form indicated by a solid line in Fig. 5 is folded, the airbag module ABM including the gas generator 31 and the airbag 41 as main members is stored in a compact form as illustrated by a two-dot chain line in Fig. 5. The airbag module ABM in which the airbag 41 is stored is stored in the storage portion 25 illustrated in Fig. 3. The bolts 34 exposed from the bag body 42 are inserted into the side frame portion 22 from the adjacent vehicle seat 14 side, and nuts 35 are fastened to the bolts 34. By this fastening, the gas generator 31 is fixed together with the fixing portion 68 of the bag body 42 and the inner tube 81 to the side frame portion 22.

The gas generator 31 may be fixed to the side frame portion 22 by a member different from the bolts 34 and the nuts 35 described above. The inflator 32 may be directly fixed to the side frame portion 22 without using the retainer 33.

The far-side airbag apparatus includes an impact sensor 91 and a control device 92 illustrated in Fig. 4 in addition to the airbag module ABM. The impact sensor 91 includes an acceleration sensor or the like, and is provided on the side wall portions 11, 12 or the like to detect an impact applied to the side wall portions 11, 12 from outside. The control device 92 is a circuit including one or more processors that operate in accordance with a computer program (software), one or more dedicated hardware circuits that execute at least a part of various processing, or a combination thereof. The control device 92 controls the operation of the gas generator 31 based on a detection signal from the impact sensor 91. In the present embodiment, when the impact sensor 91 detects that an impact is applied to one of the pair of side wall portions 11, 12 from the outside, the control device 92 outputs an operation signal for operating the gas generator 31 to the gas generator 31.

Further, a near-side airbag apparatus (not illustrated) is provided at a side portion of the vehicle seat 13 in Fig. 1 that is on a side wall portion 11 side. The near-side airbag apparatus is a side airbag apparatus of a type in which, when an impact is applied to the side wall portion 11 from the outside, the airbag is unfolded and inflated between the side wall portion 11 and the vehicle seat 13 to restrain the occupant P1 and protect the occupant P1 from the impact. A near-side airbag apparatus similar to that described above is also provided at a side portion of the vehicle seat 14 in Fig. 1 that is on a side wall portion 12 side.

A seatbelt device (not illustrated) for restraining the occupant P1 seated in the vehicle seat 13 to the vehicle seat 13 and a seatbelt device (not illustrated) for restraining the occupant P2 seated in the vehicle seat 14 to the vehicle seat 14 are provided in the vehicle interior.

Next, operations according to the present embodiment configured as described above will be described. Effects caused by the operations will also be described.

As described above, the lower inflation portion 43 and the upper inflation portion 51 of the bag body 42 can be connected to and integrated with each other and be regarded as one inflation portion having a large capacity. For this reason, the internal pressure of the bag body 42 is lower than the internal pressure of the lower inflation portion in a case where the inflation gas is exclusively supplied to the lower inflation portion at an initial stage of inflation of the bag body 42 (WO2019/110705 corresponds to this case). A cloth portion capable of withstanding the internal pressure may be a cloth portion made of yarns having lower fineness than a cloth portion of the airbag described in WO2019/110705. The cloth portion made of yarns having low fineness is thinner and softer than the cloth portion made of yarns having high fineness. Therefore, the bag body 42 is easily folded and has excellent foldability. Further, the size of the bag body 42 when folded into a storage form is reduced. The space necessary for mounting the airbag module ABM, in which the bag body 42 is in the storage form, on the vehicle seat 13 is reduced. The airbag module ABM can also be stored in the small storage portion 25 and the storage performance is improved.

In Figs. 1 and 4, when the impact sensor 91 detects that no impact of a predetermined value or more is applied to the side wall portions 11, 12 from the outside during traveling of the vehicle 10, the control device 92 does not output the operation signal to the gas generator 31, and no inflation gas is ejected. As illustrated in Fig. 3, the bag body 42 continues to be stored in the storage portion 25 in a storage form.

When one of the side wall portions 11, 12, for example, the side wall portion 12 is a specific side wall portion and an impact due to a side collision or the like is applied to the side wall portion 12 from a lateral side indicated by an arrow in Fig. 1, the upper body of the occupant P1 on the driver seat side, which is a side far from the side wall portion 12 to which the impact is applied, tends to move toward the side wall portion 12 due to inertia. This movement also includes movement of falling toward the side wall portion 12 side.

On the other hand, when the impact sensor 91 of Fig. 4 detects that an impact of a predetermined value or more is applied to the side wall portion 12 from the outside, the control device 92 outputs the operation signal to the gas generator 31 in response to the detection signal. In response to the operation signal, the inflation gas is ejected from the gas ejection portion 32a at the upper end portion of the inflator 32. The inflation gas is supplied to the lower inflation portion 43 of the airbag 41 in the storage form in which the gas ejection portion 32a is disposed. The inflation gas causes the lower inflation portion 43 to start unfoldment and inflation.

In the present embodiment in which at least the gas injection portion 32a of the gas generator 31 is surrounded by the inner tube 81, the inflation gas discharged from the gas discharge portion 32a flows through the inner tube 81. As illustrated in Fig. 13, a part of the inflation gas flows downward in the lower inflation portion 43 through the gas outlet 87 of the inner tube 81. When the inflation gas is supplied to the lower inflation portion 43, the internal pressure of the lower inflation portion 43 increases. The lower inflation portion 43 starts to inflate forward and downward while unfolding, that is, while expanding.

The inflation gas that has passed through the lower inflation portion 43 is supplied to the upper inflation portion 51. Here, as described above, the lower inflation portion 43 and the upper inflation portion 51 of the bag body 42 are integrally connected to each other. Therefore, although the inflation gas is supplied to the upper inflation portion 51 via the lower inflation portion 43, the inflation gas is supplied not only to the lower inflation portion 43 but also to the upper inflation portion 51 from a relatively early timing in the initial stage of inflation of the bag body 42. The supplied inflation gas causes the upper inflation portion 51 to start unfoldment and inflation slightly later than the start of unfoldment and inflation of the lower inflation portion 43.

The lower inflation portion 43 and the upper inflation portion 51 that are unfolded and inflated as described above press the seat pad 23 near the storage portion 25 in Fig. 3, and break the seat pad 23 at the breakable portion 27. Thereafter, the supply of the inflation gas is continued and the lower inflation portion 43 comes out of the storage portion 25 to the outside of the vehicle seat 13 in a state where the fixing portion 68 and peripheral portions thereof remain in the storage portion 25.

A gap between the console box 18 and the occupant P1 is originally narrow. In addition, since the upper body of the occupant P1 moves toward the side to which the impact is applied due to inertia, the gap becomes narrower as time elapses. When the unfoldment and inflation of the lower inflation portion 43 is started slowly, it becomes difficult for the lower inflation portion 43 to enter the gap.

In this regard, in the present embodiment as described above, the inflation gas ejected from the gas ejection portion 32a is preferentially supplied to the lower inflation portion 43 by the inner tube 81. Further, the inflation gas flows downward of the lower inflation portion 43 under the rectifying operation of the inner tube 81. For this reason, after the supply of the inflation gas is started, the internal pressure of the lower inflation portion 43 increases in a relatively short time and the unfoldment and inflation of the lower inflation portion 43 is started. In addition, the lower inflation portion 43 is inflated such that the inflation thickness in the left-right direction decreases toward the lower side. For this reason, the lower end portion of the lower inflation portion 43 can be inserted into the narrow gap.

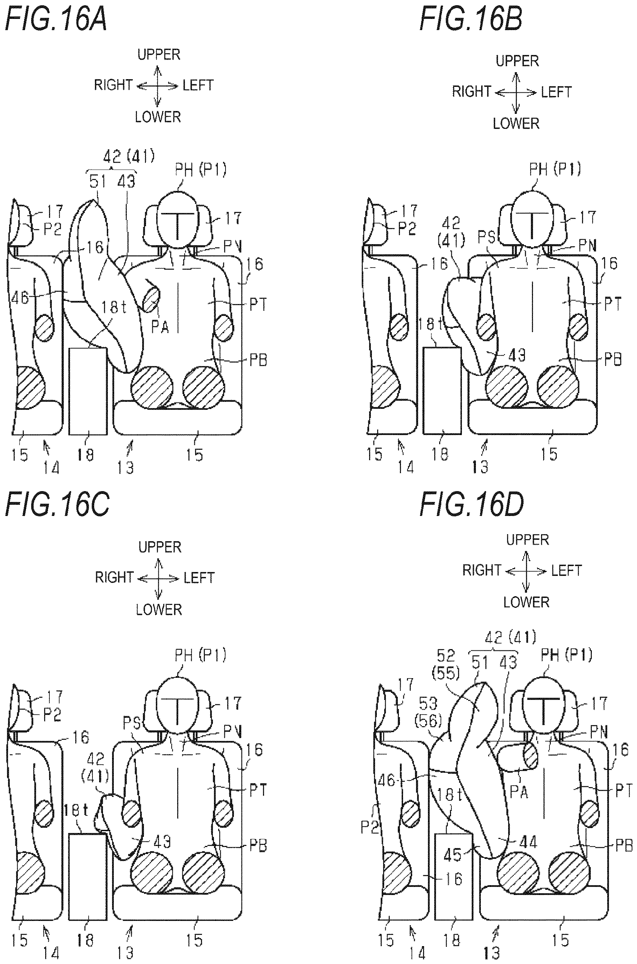

Thereafter, the lower inflation portion 43 to which the inflation gas is supplied is unfolded and inflated between the vehicle seats 13, 14 toward a front upper side as illustrated in Figs. 16A to 16C. The lower inflation portion 43 is located on a lateral side of the chest PT and the stomach PB of the occupant P1.

As illustrated in Fig. 16C, the lower inflation portion 43 comes into contact with an arm PA of the occupant P1 from below and pushes up the arm PA in the process of unfoldment and inflation.

The lower inflation portion 43 is pushed by the arm PA, the chest PT, and the stomach PB of the occupant P1 moving toward the side wall portion 12. Due to this pressing force, the lower inflation portion 43 tends to fall toward the adjacent vehicle seat 14 with the fixing portion 68 as a fulcrum.

In this regard, in the present embodiment, the lower end portion of the lower inflation portion 43 is unfolded and inflated between the console box 18 and the occupant P1. A part of the lower inflation portion 43 that is lower than the upper surface 18t of the console box 18 enters between the console box 18 and the occupant P1. The above-mentioned part of the lower inflation portion 43 comes into contact with the console box 18, thereby being restricted by the console box 18 from further moving toward the side wall portion 12. A position of the part of the lower inflation portion 43 that is lower than the upper surface 18t of the console box 18 is stabilized.

The lower inflation portion 43 is inflated such that the upper end portion of the lower inflation portion 43 has a maximum inflation thickness in the left-right direction. For this reason, the contact portion 46 at the upper end portion of the lower inflation portion 43 comes into contact with a side portion of the seat back 16 of the vehicle seat 14 that is on the vehicle seat 13 side. Due to this contact, the lower inflation portion 43 is received by the seat back 16. The lower inflation portion 43 is restricted from further falling by the seat back 16. The chest PT and the stomach PB are received by the lower inflation portion 43 that is in contact with the seat back 16 at the contact portion 46, and the movement of the chest PT and the stomach PB toward the lateral side is restricted. The performance of the airbag 41 that restricts the movement of the upper body of the occupant P1 and protects the upper body from impact is enhanced.

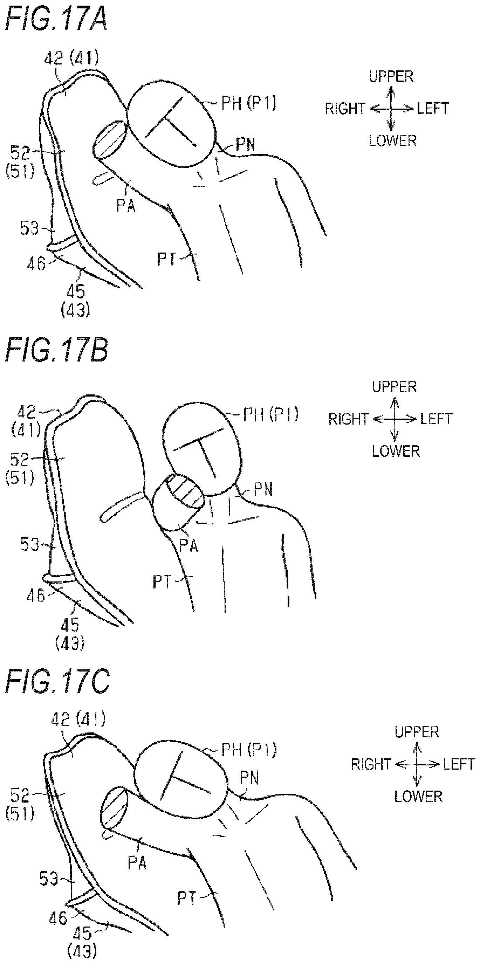

As illustrated in Figs. 2 and 16D, when the inflation gas is supplied to the upper inflation portion 51 through the lower inflation portion 43, the inflation portion 51 is unfolded and inflated on the lateral side of the neck PN and the head PH of the occupant P1 in a state in which the upper inflation portion 51 is inclined to approach the occupant P1 toward the upper side. The upper inflation portion 51 is closer to the head PH than when the upper inflation portion 51 is not inclined. A gap between the upper inflation portion 51 and the head PH is narrower than that when the upper inflation portion 51 is not inclined. For this reason, when the neck PN and the head PH of the occupant P1 move toward the side wall portion 12 due to inertia in a state in which the chest PT and the stomach PB are received by the lower inflation portion 43 as described above, the neck PN and the head PH immediately come into contact with the upper inflation portion 51 as illustrated in Figs. 17A and 17B. The upper inflation portion 51 is pushed by the head PH and the arm PA that move toward the side wall portion 12. However, the seat back 16 restricts the upper inflation portion 51 from further falling due to the contact of the contact portion 46 with the seat back 16. As illustrated in Fig. 17C, the head PH and the arm PA are received by the upper inflation portion 51 whose movement is restricted by the seat back 16, and the movement of the head PH and the arm PA toward the lateral side is restricted. That is, the neck PN and the head PH are restrained and protected from the impact.

As the upper inflation portion 51 inflates, the surface upper cloth portion 52 and the back upper cloth portion 53 tend to expand away from each other in the width direction. However, with the movement of the surface upper cloth portion 52 and the back upper cloth portion 53, the inflation thickness restricting portion 71 extending between the surface upper cloth portion 52 and the back upper cloth portion 53 is pulled in the above direction. As illustrated in Fig. 14B, when the inflation thickness restricting portion 71 is in a tensioned state, further inflation of the portion of the surface upper cloth portion 52 and the back upper cloth portion 53 to which the inflation thickness restricting portion 71 is joined is restricted.

From the viewpoint of protecting the head PH from the impact, it is required that a portion of the upper inflation portion 51 that is on the lateral side of the head PH has a large inflation thickness. Further, from the viewpoint of protecting a shoulder PS from the impact, it is required that a portion of the lower inflation portion 43 that is on a lateral side of the shoulder PS has a large inflation thickness.

In this regard, in the present embodiment, due to the restriction of the inflation thickness, the inflation thickness of the portion of the upper inflation portion 51 that is on the lateral side of the neck PN is smaller than the inflation thickness of the portion of the upper inflation portion 51 that is adjacent to the above-mentioned portion in the upper-lower direction.

For this reason, the inflation thickness of the portion of the upper inflation portion 51 that is on the lateral side of the head PH can be made larger than the inflation thickness of the portion of the upper inflation portion 51 that is on the lateral side of the neck PN. In addition, the inflation thickness of the portion of the lower inflation portion 43 on the lateral side of the shoulder portion PS can be made larger than the inflation thickness of the portion of the lower inflation portion 43 on the lateral side of the neck PN. As a result, the head PH and the shoulder PS of the occupant P1 can be efficiently protected by the airbag 41 from the impact.

Here, when one of an end portion of the lower peripheral edge sewn portion 61, an end portion of the upper peripheral edge sewn portion 62, and an end portion of the intermediate peripheral edge sewn portion 63 is separated from the others at the boundary portion 66 and there is a gap between the end portions, the inflation gas inside the bag body 42 may leak to the outside of the bag body 42 through the gap. The internal pressure of the bag body 42 decreases due to the leakage of the inflation gas.

In this regard, in the present embodiment, as illustrated in Figs. 8, 9, 11, and 12, the upper peripheral edge sewn portion 62, the lower peripheral edge sewn portion 61, and the intermediate peripheral edge sewn portion 63 intersect each other and there is no gap between the end portions. For this reason, it is possible to prevent the inflation gas inside the bag body 42 from leaking to the outside due to the gap.

Further, at the boundary portion 66, when one of the lower peripheral edge sewn portion 61, the upper peripheral edge sewn portion 62, and the intermediate peripheral edge sewn portion 63 is parallel to one of the warps 64 and the wefts 65 of the large cloth sheet 55 and one of the warps 64 and the wefts 65 of the small cloth sheet 56, the following phenomenon may occur. The phenomenon is that, when a force is applied to a seam allowance in a direction in which the force intersects a peripheral edge sewn portion (the lower peripheral edge sewn portion 61, the upper peripheral edge sewn portion 62, the intermediate peripheral edge sewn portion 63), a thread of the warps 64 and the wefts 65 that is parallel to the peripheral edge sewn portion moves in a direction away from the peripheral edge sewn portion, and the weave design in the seam allowance may be broken or the thread may fall off from the seam allowance.

In this regard, at the boundary portion 66 of the present embodiment, the lower peripheral edge sewn portion 61, the upper peripheral edge sewn portion 62, and the intermediate peripheral edge sewn portion 63 intersect both the warps 64 and the wefts 65 of the large cloth sheet 55 and both the warps 64 and the wefts 65 of the small cloth sheet 56. No yarn of the warps 64 and the wefts 65 is parallel to the peripheral edge sewn portion. For this reason, even when a force is applied to the seam allowance in a direction in which the force intersects the peripheral edge sewn portion, the warps 64 and the wefts 65 constituting the seam allowance are less likely to move away from the peripheral edge sewn portion. Deformation of the weave design in the seam allowance or falling of the warps 64 and the wefts 65 from the seam allowance is prevented.

A case in contrast to the embodiment described above where the side wall portion 11 of Fig. 1 is a specific side wall portion and an impact is applied to the side wall portion 11 from the outside will not be described, and the same operation as described above is performed so that the occupant P2 seated in the vehicle seat 14 is protected from the impact.

According to the present embodiment, the following effects can be obtained in addition to those described above.

In the bag body described in WO2019/110705, the lower inflation portion and the upper inflation portion are independent from each other and are connected to communicate with each other via a communication hole. When using this joining structure, at least three cloth sheets are necessary to form the bag body. A surface lower cloth portion having a communication hole and a surface upper cloth portion having a communication hole are used and overlapped such that the communication holes match each other. Therefore, the surface lower cloth portion and the surface upper cloth portion are formed of separate cloth sheets. In order to join the surface lower cloth portion and the surface upper cloth portion around the communication holes, the surface upper cloth portion and a back upper cloth portion are formed of separate cloth sheets. In this manner, three cloth sheets are used.

It is for sure that separate cloth sheets may be used as the surface lower cloth portion and a back lower cloth portion. In this case, four cloth sheets are used. As described above, the airbag described in WO2019/110705 requires a large number of cloth sheets.

The airbag is formed by sewing a peripheral edge portion of the surface lower cloth portion and a peripheral edge portion of the back lower cloth portion, joining the surface lower cloth portion and the surface upper cloth portion around the communication hole, and sewing a peripheral edge portion of the surface upper cloth portion and a peripheral edge portion of the back upper cloth portion. Therefore, forming the airbag is complicate.

In this regard, in the present embodiment, the lower inflation portion 43 and the upper inflation portion 51 are connected to each other in a state where the lower inflation portion 43 and the upper inflation portion 51 communicate with each other, and the bag body 42 as a whole is constituted by one inflation portion. For this reason, the bag body 42 is formed by the large cloth sheet 55 including the surface lower cloth portion 44, the surface upper cloth portion 52, and the back lower cloth portion 45, and the small cloth sheet 56 including the back upper cloth portion 53. For this reason, the bag body 42 can be formed of a small number of cloth sheets. This makes it possible to reduce the thickness of the airbag 41 when the airbag 41 is folded into a storage form, and the airbag 41 can be easily stored in the storage portion 25.

Further, in the present embodiment, since the bag body 42 is formed by joining the small cloth sheet 56 to the large cloth sheet 55 by sewing the peripheral edge portion of the small cloth sheet 56 to the peripheral edge portion of the large cloth sheet 55, the bag body 42 can be formed more easily than the technique described in WO2019/110705.
· The lower inflation portion 43 can be brought into contact with the seat back 16 of the adjacent vehicle seat 14 by inflating the lower inflation portion 43 such that the inflation thickness in the left-right direction is constant at any portion in the upper-lower direction. However, in this case, the capacity of the lower inflation portion 43 becomes unnecessarily large.

In this regard, in the present embodiment, the lower inflation portion 43 is formed such that the inflation thickness is maximum at the upper end portion. That is, the inflation thickness of the lower inflation portion 43 in the left-right direction is large in a portion. The portion where the inflation thickness is large serves as the contact portion 46 where the lower inflation portion 43 comes into contact with the adjacent vehicle seat 14. For this reason, the capacity of the lower inflation portion 43 can be reduced.

The above embodiment can also be implemented as modifications which are modified as follows. The above embodiment and the following modifications can be implemented in combination with each other within a technically consistent range.

### Gas Generator 31

· The gas generator 31 may be disposed outside the airbag 41. In this case, the gas injection portion 32a of the gas generator 31 and the lower inflating portion 43 of the bag body 42 may be connected by a tube, and the inflation gas injected from the gas jetting portion 32a may be supplied to the lower inflating portion 43 via the tube.
· The arrangement of the gas generator 31 in the lower inflation portion 43 may be changed under a condition that at least the gas injection portion 32a of the gas generator 31 is disposed inside the lower inflation portion 43. For example, the gas generator 31 may be disposed in a state in which a part of the gas generator 31 that includes an end portion opposite to the gas injection portion 32a is exposed from the lower inflation portion 43.

### Bag Body 42

· The fixing portion 68 of the bag body 42 may be fixed to, instead of the side frame portion 22, a member having substantially the same rigidity as the side frame portion 22 among members constituting the vehicle seats 13, 14.
· The bag body 42 may be substantially entirely inflated as in the above-described embodiment, and may have a noninflated portion that is not supplied with inflation gas and does not inflate.
· The lower inflation portion 43 may be changed to be unfolded and inflated on a lateral side of a part of the upper body that is different from that of the above-described embodiment under a condition that the lower inflation portion 43 is unfolded and inflated below the neck PN on a lateral side of upper bodies of the occupants P1, P2.

For example, the lower inflation portion 43 may be unfolded and inflated on a lateral side of a part of the upper body that is above the stomach PB. The lower inflation portion 43 may be unfolded and inflated on a lateral side of a waist in addition to the chest PT and the stomach PB.

### Inflation Thickness Restricting Portion 71 and Inner Tube 81

· The inflation thickness restricting portion 71 may be omitted, or be provided at a plurality of portions in the upper inflation portion 51. The inflation thickness restricting portion 71 may be provided in the lower inflation portion 43.
· The inner tube 81 may be omitted as appropriate.

### Others

· The control device 92 may be changed into a specification for outputting an operation signal to the gas generator 31 when it is predicted that an impact will be applied to the side wall portions 11, 12 from the lateral side or the oblique front side.
· When the far-side airbag apparatus is applied to the vehicle 10 in which the console box 18 is disposed between the adjacent vehicle seats 13, 14, as described above, the bag body 42 can be maintained in an upright state and a particularly large effect can be obtained. However, the far-side airbag apparatus is also applicable to a vehicle including no console box. Even in this case, it is possible to obtain the effect of improving the storage performance while ensuring the pressure resistance of the bag body during inflation.
· The far-side airbag apparatus can also be applied to the vehicle 10 in which the plurality of vehicle seats 13, 14 are disposed in a posture in which the seat back 16 faces a direction different from the forward direction of the vehicle 10, for example, a lateral direction. In this case, in the vehicle 10, a pair of wall portions that sandwich the vehicle seats 13, 14 from both sides in the width direction correspond to a pair of side wall portions in the claims.
· In the above embodiment, the vehicle seat 13 is the driver seat and the vehicle seat 14 is the front passenger seat. Alternatively, the present disclosure is not limited to this and the vehicle seats 13 and 14 may be rear seats of the vehicle (seats in a second and subsequent rows) as long as they are independent.
· The above-described far-side airbag apparatus may also be applied to a vehicle in which three or more vehicle seats are arranged side by side in the width direction. In this case, when it is detected that an impact is applied to a specific side wall portion of the vehicle, or when it is predicted that an impact will be applied to the specific side wall portion of the vehicle, the airbag is unfolded and inflated between adjacent vehicle seats.
· The vehicle to which the above described far-side airbag apparatus is applied not only includes private vehicles but also includes various industrial vehicles.
· The above described far-side airbag apparatus may also be mounted on a vehicle other than an automobile, such as an aircraft or a ship. When the far-side airbag apparatus is unfolded and inflated between adjacent vehicle seats, an occupant seated in a vehicle seat far from a side wall portion to which an impact is applied can be protected from the impact.

## Claims

1. A far-side airbag apparatus configured to be applied to a vehicle, the vehicle including a plurality of vehicle seats (13, 14) arranged in parallel in a width direction of the vehicle seats, two side portions of the vehicle in the width direction being constituted by a pair of side wall portions, one of the two side wall portions being set to a specific side wall portion, an airbag (41) being unfolded and inflated by inflation gas between adjacent vehicle seats (13, 14) when it is detected that an impact is applied to the specific side wall portion from outside or when it is predicted that an impact will be applied to the specific side wall portion,
wherein a bag body (42) constituting an outer shell part of the airbag (41) includes a lower inflation portion (43) that is unfolded and inflated at least on a lateral side of a chest among parts below a neck (PN) of an occupant (P1) seated in one of the adjacent vehicle seats (13, 14), and an upper inflation portion (51) that is unfolded and inflated on a lateral side of a part above the chest (PT) of the occupant (P1) in a state in which the upper inflation portion (51) is inclined to approach the occupant (P1) toward an upper side,
**characterized in that**
the lower inflation portion (43) is formed by joining a surface lower cloth portion (44) on a side close to the occupant (P1) and a back lower cloth portion (45) on a side far from the occupant at a peripheral edge portion different from an upper peripheral edge portion,
the upper inflation portion (51) is formed by joining a surface upper cloth portion (52) on a side close to the occupant (P1) and a back upper cloth portion (53) on a side far from the occupant (P1) at a peripheral edge portion different from a lower peripheral edge portion, and
the surface lower cloth portion (44), the back lower cloth portion (45), and the surface upper cloth portion (52) are integrally formed of a large cloth sheet (55), the back upper cloth portion (53) is formed of a small cloth sheet (56) smaller than the large cloth sheet (55), and a lower peripheral edge portion of the back upper cloth portion (53) is joined to an upper peripheral edge portion of the back lower cloth portion (45).

2. The far-side airbag apparatus according to claim 1,
wherein each of the vehicle seats (13, 14) includes a seat back (16) that supports an occupant (P1) from a rear side,
wherein the bag body (42) includes a fixing portion (68),
wherein the bag body (42) is fixed by the fixing portion (68) to a side portion (21) of a vehicle seat (13, 14) on a side far from the specific side wall portion, the side portion (21) being on a side close to the specific side wall portion, and
wherein the lower inflation portion (43) includes a contact portion (46) that comes into contact with a seat back (16) of a vehicle seat (13, 14) on a side close to the specific side wall portion when the lower inflation portion (43) is in an unfolded and inflated state.

3. The far-side airbag apparatus according to claim 2,
wherein the lower inflation portion (43) includes a portion whose inflation thickness in the width direction is larger than other portions of the lower inflation portion (43), and
wherein the portion having a large inflation thickness includes the contact portion (46).

4. The far-side airbag apparatus according to any one of claims 1 to 3,
wherein the upper inflation portion (51) includes an inflation thickness restricting portion (71) that restricts an inflation thickness of a portion of the upper inflation portion (51) that is on a lateral side of the neck (PN), and
wherein the inflation thickness restricting portion (71) restricts the inflation thickness such that an inflation thickness of the portion on the lateral side of the neck (PN) is smaller than an inflation thickness of a portion that is adjacent to the above-mentioned portion in an upper-lower direction.

5. The far-side airbag apparatus according to claim 4,
wherein the inflation thickness restricting portion (71) is disposed inside the upper inflation portion (51) and extends between the surface upper cloth portion (52) and the back upper cloth portion (53).

6. The far-side airbag apparatus according to any one of claims 1 to 5,
wherein each of the large cloth sheet (55) and the small cloth sheet (56) is formed of woven fabric including a warp (64) and a weft (65),
wherein in the surface lower cloth portion (44) and the back lower cloth portion (45), peripheral edge portions different from upper peripheral portions are joined to each other by a lower peripheral edge sewn portion (61),
wherein in the surface upper cloth portion (52) and the back upper cloth portion (53), peripheral edge portions different from lower peripheral edge portions are joined to each other by an upper peripheral edge sewn portion (62),
wherein a lower peripheral edge portion of the back upper cloth portion (53) and an upper peripheral edge portion of the back lower cloth portion (45) are joined by an intermediate peripheral edge sewn portion (63),
wherein the upper peripheral edge sewn portion (62), the lower peripheral edge sewn portion (61), and the intermediate peripheral edge sewn portion (63) intersect each other at a boundary portion (66) between the surface lower cloth portion (44), the back lower cloth portion (45), the surface upper cloth portion (52), and the back upper cloth portion (53), and
wherein, at the boundary portion (66), the upper peripheral edge sewn portion (62), the lower peripheral edge sewn portion (61), and the intermediate peripheral edge sewn portion (63) intersect both the warp (64) and the weft (65) of the large cloth sheet (55), and intersect both the warp (64) and the weft (65) of the small cloth sheet (56).

7. The far-side airbag apparatus according to any one of claims 1 to 6,
wherein a console box (18) is disposed between the adjacent vehicle seats (13, 14), and
wherein the bag body (42) is unfolded and inflated such that a lower end of the lower inflation portion (43) is located below an upper surface (18t) of the console box (18).

8. The far-side airbag apparatus according to claim 7,
wherein the lower inflation portion (43) is inflated such that an inflation thickness in the width direction decreases toward a lower side.

9. The far-side airbag apparatus according to claim 7 or 8, further comprising:
a gas generator (31) including a gas ejection portion (32a) that ejects inflation gas,
wherein at least the gas ejection portion (32a) of the gas generator (31) is disposed inside the lower inflation portion (43),
wherein an inner tube (81) is disposed inside the lower inflation portion (43) in a state of surrounding the gas ejection portion (32a) of the gas generator (31), and
wherein the inner tube (81) has a gas outlet (87) that opens downward in the lower inflation portion (43).

## Patentansprüche

1. Fernseitenairbagvorrichtung, die dazu konfiguriert ist, an einem Fahrzeug angebracht zu werden, wobei das Fahrzeug eine Mehrzahl von Fahrzeugsitzen (13, 14) aufweist, die parallel in einer Breitenrichtung der Fahrzeugsitze angeordnet sind, zwei Seitenbereiche des Fahrzeugs in der Breitenrichtung durch ein Paar von Seitenwandbereichen gebildet sind, einer der zwei Seitenwandbereiche als ein spezifischer Seitenwandbereich festgelegt ist, ein Airbag (41) durch ein Befüllungsgas zwischen benachbarten Fahrzeugsitzen (13, 14) entfaltet und aufgeblasen wird, wenn erfasst wird, dass ein Aufprall auf den spezifischen Seitenwandbereich von der Außenseite aufgebracht wird, oder wenn es vorhergesagt wird, dass ein Aufprall auf den spezifischen Seitenwandbereich aufgebracht werden wird,
bei der ein Sackkörper (42), die einen Außenmantelteil des Airbags (41) bildet, einen unteren Aufblasbereich (43), der zumindest an einer seitlichen Seite einer Brust von Teilen unterhalb eines Halses (PN) eines Fahrzeuginsassen (P1), der in einem der benachbarten Fahrzeugsitze (13, 14) sitzt, entfaltet und aufgeblasen wird, und einen oberen Aufblasbereich (51) aufweist, der auf einer seitlichen Seite eines Teils oberhalb der Brust (PT) des Fahrzeuginsassen in einem Zustand entfaltet und aufgeblasen wird, in welchem der obere Aufblasbereich (51) derart geneigt ist, dass er sich dem Fahrzeuginsassen (P1) in Richtung einer oberen Seite annähert,
**dadurch gekennzeichnet, dass**
der untere Aufblasbereich (43) durch Verbinden eines unteren Oberflächentuchbereichs (44) auf einer Seite nahe dem Fahrzeuginsassen (P1) und eines unteren Rückseitentuchbereichs (45) auf einer Seite entfernt von dem Fahrzeuginsassen an einem Umfangskantenbereich unterschiedlich von einem oberen Umfangskantenbereich ausgebildet wird,
der obere Aufblasbereich (51) durch Verbinden eines oberen Oberflächentuchbereichs (52) auf einer Seite nahe zu dem Fahrzeuginsassen (P1) und eines oberen Rückseitentuchbereichs (53) auf einer Seite entfernt von dem Fahrzeuginsassen (P1) an einem Umfangskantenbereich unterschiedlich von einem unteren Umfangskantenbereich ausgebildet wird, und
der untere Oberflächentuchbereich (44), der untere Rückseitentuchbereich (45) und der obere Oberflächentuchbereich (52) integral aus einer großen Tuchbahn (55) ausgebildet sind, der obere Rückseitentuchbereich (53) aus einer kleinen Tuchbahn (56) ausgebildet ist, die kleiner als die große Tuchbahn (55) ist, und ein unterer Umfangskantenbereich des oberen Rückseitentuchbereichs (53) mit einem oberen Umfangskantenbereich des unteren Rückseitentuchbereichs (45) verbunden ist.

2. Fernseitenairbagvorrichtung nach Anspruch 1,
bei der jeder der Fahrzeugsitze (13, 14) eine Rückenlehne (16) aufweist, die einen Fahrzeuginsasse (P1) von einer Rückseite stützt,
bei der der Sackkörper (42) einen Fixierungsbereich (68) aufweist,
bei der der Sackkörper (42) durch den Fixierungsbereich (68) an einem Seitenbereich (21) des Fahrzeugsitzes (13, 14) auf einer Seite entfernt von den spezifischen Seitenwandbereichen fixiert ist, bei der der Seitenbereich (21) auf einer Seite nahe zu dem spezifischen Seitenwandbereich ist, und
bei der untere Aufblasbereich (43) einen Kontaktbereich (46) aufweist, der in Kontakt mit einer Rückenlehne (16) eines Fahrzeugsitzes (13, 14) auf einer Seite nahe dem spezifischen Seitenwandbereich kommt, wenn der untere Aufblasbereich (43) in einem entfalteten und aufgeblasenen Zustand ist.

3. Fernseitenairbagvorrichtung nach Anspruch 2,
bei der der untere Aufblasbereich (43) einen Bereich aufweist, dessen Aufblasdicke in der Breitenrichtung größer als andere Bereiche des unteren Aufblasbereichs (43) ist, und
bei der der Bereich, der eine große Aufblasdicke aufweist, den Kontaktbereich (46) aufweist.

4. Fernseitenairbagvorrichtung nach einem der Ansprüche 1 bis 3,
bei der der obere Aufblasbereich (51) einen Aufblasdickeneinschränkungsbereich (71) aufweist, der eine Aufblasdicke eines Bereichs des oberen Aufblasbereichs (51) einschränkt, der sich auf einer seitlichen Seite des Halses (PN) befindet, und
bei der der Aufblasdickeneinschränkungsbereich (71) die Aufblasdicke derart einschränkt, dass eine Aufblasdicke des Bereichs auf der seitlichen Seite des Halses (PN) kleiner als eine Aufblasdicke eines Bereichs ist, der benachbart zu dem oben genannten Bereich in einer Oben-Unten-Richtung ist.

5. Fernseitenairbagvorrichtung nach Anspruch 4, bei der
der Aufblasdickeneinschränkungsbereich (71) im Inneren des oberen Aufblasbereichs (51) angeordnet ist und sich zwischen dem oberen Oberflächentuchbereich (52) und dem oberen Rückseitentuchbereich (53) erstreckt.

6. Fernseitenairbagvorrichtung nach einem der Ansprüche 1 bis 5,
bei der jede von der großen Tuchbahn (55) und der kleinen Tuchbahn (56) aus einem Gewebestoff mit einer Kette (64) und einem Schuss (65) ausgebildet ist,
bei der bei dem unteren Oberflächentuchbereich (44) und dem unteren Rückseitentuchbereich (45) Umfangskantenbereiche unterschiedlich von den oberen Umfangskantenbereichen miteinander durch einen unteren Umfangskantennahtbereich (61) verbunden sind,
bei der bei dem oberen Oberflächentuchbereich (52) und dem oberen Rückseitentuchbereich (53) Umfangskantenbereiche unterschiedlich von unteren Umfangskantenbereichen miteinander durch einen oberen Umfangskantennahtbereich (62) verbunden sind,
bei der ein unterer Umfangskantenbereich des oberen Rückseitentuchbereichs (53) und ein oberer Umfangskantenbereich des unteren Rückseitentuchbereichs (45) durch einen Zwischenumfangskantennahtbereich (63) verbunden sind,
bei der der obere Umfangskantennahtbereich (62), der untere Umfangskantennahtbereich (61) und der Zwischenumfangskantennahtbereich (63) in einem Grenzbereich (66) zwischen dem unteren Oberflächentuchbereich (44), dem unteren Rückseitentuchbereich (45), dem oberen Oberflächentuchbereich (52) und dem oberen Rückseitentuchbereich (53) einander kreuzen, und
bei der an dem Grenzbereich (66) der obere Umfangskantennahtbereich (62), der untere Umfangskantennahtbereich (61) und der Zwischenumfangskantennahtbereich (63) sowohl die Kette (64) als auch den Schuss (65) der großen Tuchbahn (55) kreuzen und sowohl die Kette (64) als auch den Schuss (65) der kleinen Tuchbahn (56) kreuzen.

7. Fernseitenairbagvorrichtung nach einem der Ansprüche 1 bis 6,
bei der ein Konsolenkasten (18) zwischen den benachbarten Fahrzeugsitzen (13, 14) angeordnet ist, und
bei der der Sackkörper (42) derart entfaltet und aufgeblasen wird, dass sich ein unteres Ende des unteren Aufblasbereichs (43) unterhalb einer oberen Oberfläche (18t) des Konsolenkastens (18) befindet.

8. Fernseitenairbagvorrichtung nach Anspruch 7,
bei der der untere Aufblasbereich (43) derart aufgeblasen wird, dass eine Aufblasdicke in der Breitenrichtung in Richtung einer unteren Seite abnimmt.

9. Fernseitenairbagvorrichtung nach Anspruch 7 oder 8, ferner mit
einem Gasgenerator (31), der einen Gasausstoßbereich (32a) aufweist, der ein Befüllungsgas ausstößt,
bei der zumindest der Gasausstoßbereich (32a) des Gasgenerators (31) im Inneren des unteren Aufblasbereichs (43) angeordnet ist,
bei der ein Innenrohr (81) im Inneren des unteren Aufblasbereichs (43) in einem Zustand angeordnet ist, in dem es den Gasausstoßbereich (32a) des Gasgenerators (31) umgibt, und
bei der das Innenrohr (81) einen Gasauslass (87) aufweist, der sich nach unten in den unteren Aufblasbereich (43) öffnet.

## Revendications

1. Appareil de coussin de sécurité gonflable latéral configuré pour être appliqué à un véhicule, le véhicule comprenant une pluralité de sièges de véhicule (13, 14) disposés en parallèle dans une direction de largeur des sièges de véhicule, deux parties latérales du véhicule dans la direction de largeur étant constituées d'une paire de parties de paroi latérale, l'une des deux parties de paroi latérale étant réglée sur une partie de paroi latérale spécifique, un coussin de sécurité gonflable (41) étant déplié et gonflé par un gaz de gonflage entre les sièges adjacents de véhicule (13, 14) lorsqu'il est détecté qu'un impact est appliqué à la partie spécifique de paroi latérale depuis l'extérieur ou lorsqu'il est prévu qu'un impact sera appliqué à la partie spécifique de paroi latérale,
dans lequel un corps de sac (42) constituant une partie d'enveloppe extérieure du coussin de sécurité gonflable (41) comprend une partie inférieure de gonflage (43) qui est dépliée et gonflée au moins sur un côté latéral d'un torse parmi les parties situées au-dessous d'un cou (PN) d'un occupant (P1) assis sur l'un des sièges adjacents de véhicule (13, 14), et une partie supérieure de gonflage (51) qui est dépliée et gonflée sur un côté latéral d'une partie située au-dessus du torse (PT) de l'occupant (P1) dans un état dans lequel la partie supérieure de gonflage (51) est enclin à s'approcher de l'occupant (P1) vers un côté supérieur,
**caractérisé en ce que**
la partie inférieure de gonflage (43) est formée par l'assemblage d'une partie de tissu inférieur de surface (44) sur un côté proche de l'occupant (P1) et d'une partie de tissu inférieur de dos (45) sur un côté éloigné de l'occupant à une partie de bord périphérique différente d'une partie de bord périphérique supérieur,
la partie supérieure de gonflage (51) est formée par l'assemblage d'une partie de tissu supérieur de surface (52) sur un côté proche de l'occupant (P1) et d'une partie de tissu supérieur de dos (53) sur un côté éloigné de l'occupant (P1) à une partie de bord périphérique différente d'une partie de bord périphérique inférieure, et
la partie de tissu inférieur de surface (44), la partie de tissu inférieur de dos (45) et la partie de tissu supérieur de surface (52) sont intégralement formées d'une grande feuille de tissu (55), la partie de tissu supérieur de dos (53) est formée d'une petite feuille de tissu (56) plus petite que la grande feuille de tissu (55), et une partie de bord périphérique inférieur de la partie de tissu supérieur de dos (53) est assemblée à une partie de bord périphérique supérieur de la partie de tissu inférieur de dos (45).

2. Appareil de coussin de sécurité gonflable latéral selon la revendication 1,
dans lequel chacun des sièges de véhicule (13, 14) comprend un dossier (16) qui soutient un occupant (P1) à partir d'un côté arrière,
dans lequel le corps de sac (42) comprend une partie de fixation (68),
dans lequel le corps de sac (42) est fixé par la partie de fixation (68) à une partie latérale (21) d'un siège de véhicule (13, 14) sur un côté éloigné de la partie spécifique de paroi latérale, la partie latérale (21) étant sur un côté proche de la partie spécifique de paroi latérale, et
dans lequel la partie inférieure de gonflage (43) comprend une partie de contact (46) qui entre en contact avec le dossier (16) d'un siège de véhicule (13, 14) sur un côté proche de la partie spécifique de paroi latérale lorsque la partie inférieure de gonflage (43) est à l'état déplié et gonflé.

3. Appareil de coussin de sécurité gonflable latéral selon la revendication 2,
dans lequel la partie inférieure de gonflage (43) comprend une partie dont l'épaisseur de gonflage dans la direction de largeur est plus grande que les autres parties de la partie inférieure de gonflage (43), et
dans lequel la partie ayant une grande épaisseur de gonflage comprend la partie de contact (46).

4. Appareil de coussin de sécurité gonflable latéral selon l'une quelconque des revendications 1 à 3,
dans lequel la partie supérieure de gonflage (51) comprend une partie limitant l'épaisseur de gonflage (71) qui restreint l'épaisseur de gonflage d'une partie de la partie supérieure de gonflage (51) qui se trouve sur un côté latéral du cou (PN), et
dans lequel la partie limitant l'épaisseur de gonflage (71) limite l'épaisseur de gonflage de telle sorte que l'épaisseur de gonflage de la partie située sur le côté latéral du cou (PN) est inférieure à l'épaisseur de gonflage d'une partie adjacente à la partie susmentionnée dans une direction supérieure/inférieure.

5. Appareil de coussin de sécurité gonflable latéral selon la revendication 4,
dans lequel la partie limitant l'épaisseur de gonflage (71) est disposée à l'intérieur de la partie supérieure de gonflage (51) et s'étend entre la partie de tissu supérieur de surface (52) et la partie de tissu supérieur de dos (53).

6. Appareil de coussin de sécurité gonflable latéral selon l'une quelconque des revendications 1 à 5,
dans lequel chaque feuille parmi la grande feuille de tissu (55) et la petite feuille de tissu (56) est formée d'un tissu tissé comprenant une chaîne (64) et une trame (65),
dans lequel, dans la partie de tissu inférieur de surface (44) et la partie de tissu inférieur de dos (45), les parties de bord périphérique différentes des parties périphériques supérieures sont reliées les unes aux autres par une partie cousue de bord périphérique inférieur (61),
dans lequel, dans la partie de tissu supérieur de surface (52) et la partie de tissu supérieur de dos (53), les parties de bord périphérique différentes des parties de bord périphérique inférieur sont reliées les unes aux autres par une partie cousue de bord périphérique supérieur (62),
dans lequel une partie de bord périphérique inférieur de la partie de tissu supérieur de dos (53) et une partie de bord périphérique supérieur de la partie de tissu inférieur de dos (45) sont reliées par une partie cousue de bord périphérique intermédiaire (63),
dans lequel la partie cousue de bord périphérique supérieur (62), la partie cousue de bord périphérique inférieur (61) et la partie cousue de bord périphérique intermédiaire (63) se croisent au niveau d'une partie limite (66) entre la partie de tissu inférieur de surface (44), la partie de tissu inférieur de dos (45), la partie de tissu supérieur de surface (52) et la partie de tissu supérieur de dos (53), et
dans lequel, au niveau de la partie limite (66), la partie cousue de bord périphérique supérieur (62), la partie cousue de bord périphérique inférieur (61) et la partie cousue de bord périphérique intermédiaire (63) se croisent à la fois la chaîne (64) et la trame (65) de la grande feuille de tissu (55), et se croisent à la fois la chaîne (64) et la trame (65) de la petite feuille de tissu (56).

7. Appareil de coussin de sécurité gonflable latéral selon l'une quelconque des revendications 1 à 6,
dans lequel une boîte de console (18) est disposé entre les sièges adjacents de véhicule (13, 14), et
dans lequel le corps de sac (42) est déplié et gonflé de telle sorte qu'une extrémité inférieure de la partie inférieure de gonflage (43) se trouve en dessous d'une surface supérieure (18t) de la boîte de console (18).

8. Appareil de coussin de sécurité gonflable latéral selon la revendication 7,
dans lequel la partie inférieure de gonflage (43) est gonflée de telle sorte qu'une épaisseur de gonflage dans la direction de largeur diminue vers un côté inférieur.

9. Appareil de coussin de sécurité gonflable latéral selon les revendications 7 ou 8, comprenant en outre :
un générateur de gaz (31) comprenant une partie d'éjection de gaz (32a) qui éjecte du gaz de gonflage,
dans lequel au moins ladite partie d'éjection de gaz (32a) du générateur de gaz (31) est disposée à l'intérieur de la partie inférieure de gonflage (43),
dans lequel un tube intérieur (81) est disposé à l'intérieur de la partie inférieure de gonflage (43) dans un état où il entoure la partie d'éjection de gaz (32a) du générateur de gaz (31), et
dans lequel le tube intérieur (81) a une sortie de gaz (87) qui s'ouvre vers le bas dans la partie inférieure de gonflage (43).
